# EUROPÄISCHE PATENTSCHRIFT

(11) **EP 3 480 372 B1**
(45) Veröffentlichungstag und Bekanntmachung des Hinweises auf die Patenterteilung: **10.04.2024**
(21) Anmeldenummer: 17199725.7
(22) Anmeldetag: 02.11.2017
(51) Int. Cl.: B66C 23/44, B66C 23/80, A01G 23/00, B66C 23/18, E02F 3/96

(54) **SEILKRAN**
CABLE CRANE
CÂBLE-GRUE

(43) Veröffentlichungstag der Anmeldung: 08.05.2019
(73) Patentinhaber: Konrad Forsttechnik GmbH, 9451 Preitenegg (AT)
(72) Erfinder: Konrad, Markus Josef, 9400 Wolfsberg (AT)
(74) Vertreter: Wirnsberger & Lerchbaum Patentanwälte OG

(56) Entgegenhaltungen:
- DE-A1- 3 022 833
- JP-A- 2015 117 511
- JP-U- S55 106 264
- US-A- 4 260 064
- US-A- 4 523 684
- US-A- 4 666 049

## Beschreibung

Die Erfindung betrifft einen Seilkran für Holzarbeiten, aufweisend einen Mast, an welchem ein Seil zum Transport von Baumstämmen und dergleichen anbringbar ist.

Aus dem Stand der Technik, wie offenbart in US 4 666 049 A, sind verschiedene Seilkräne der eingangs genannten Art bekannt geworden. Derartige Seilkräne werden bei Forstarbeiten verwendet, um gefällte Baumstämme und dergleichen mit Seilen zu transportieren. Seilkräne des Standes der Technik können beispielsweise auf Lastkraftwagen montiert oder als separate verfahrbare Einrichtungen ausgebildet sein.

Aus dem Dokument GB 2 208 161 A ist eine als Bagger ausgebildete Holzverarbeitungsvorrichtung bekannt geworden, an welcher an einem Oberwagen ein Seilkran mit einem aufrichtbaren Mast angeordnet ist. Nachteilig bei dieser Vorrichtung ist jedoch, dass die Vorrichtung nur entweder als Bagger bzw. Holzverarbeitungseinrichtung oder als Seilkran einsetzbar ist, zumal eine Rotation des Oberwagens eine Bewegung des Seilkranes bedingt. Aufgaben müssen mit einer solchen Vorrichtung daher sequentiell abgearbeitet werden, weswegen nur eine geringe Effizienz erreicht wird.

Hier setzt die Erfindung an. Aufgabe der Erfindung ist es, einen Seilkran der eingangs genannten Art anzugeben, mit welchem eine besonders effiziente Holzernte und -verarbeitung möglich ist.

Diese Aufgabe wird erfindungsgemäß durch einen Seilkran der eingangs genannten Art gelöst, bei welchem eine Koppeleinrichtung vorgesehen ist, mit welcher ein unterer Mastteil mit einem Unterwagen eines Baggers, welcher einen Unterwagen und einen um eine vertikale Rotationsachse drehbar mit dem Unterwagen verbundenen Oberwagen aufweist, verbindbar ist.

Im Rahmen der Erfindung wurde erkannt, dass eine erhöhte Effizienz bei einer Holzernte und -verarbeitung erreicht wird, wenn der Seilkran mit einem Unterwagen eines entsprechenden Baggers verbunden wird, üblicherweise unmittelbar. Der Seilkran kann dann mit dem Bagger auch in unwegsamem Gelände zu einer Arbeitsposition transportiert werden, sodass kein separates Transportmittel für den Seilkran erforderlich ist. Ferner ist über eine Anbindung an den Unterwagen des Baggers gewährleistet, dass der Oberwagen des Baggers relativ zum Unterwagen weiterhin um die üblicherweise etwa mittig angeordnete vertikale Rotationsachse bewegt werden kann, sodass eine Funktion des Baggers durch den am Unterwagen angeordneten Seilkran nicht eingeschränkt ist. Dadurch ist ein gleichzeitiges Seilen und Betätigen des Baggers, beispielsweise zur Holzverarbeitung mit einem Harvester-Kopf und somit ein paralleles Abarbeiten von Aufgaben möglich.

Günstig ist es, wenn die Koppeleinrichtung derart ausgebildet ist, dass der Seilkran mit dem Unterwagen des Baggers derart verbindbar ist, dass der Seilkran mit dem Bagger von einem Boden beabstandet transportierbar ist. Dadurch wird eine vorteilhafte Verfahrbarkeit des Baggers samt Seilkran in einer Transportposition erreicht. Üblicherweise ist die Koppeleinrichtung derart ausgebildet, dass der Seilkran mit dem Bagger lösbar und vorzugsweise starr verbindbar ist.

Es hat sich bewährt, dass der Seilkran mit einer Antriebseinheit des Baggers koppelbar ist, sodass der Seilkran vom Bagger mit Energie versorgbar ist. Der Seilkran ist somit vom Bagger aus, insbesondere von einem Motor des Baggers aus, mit Energie versorgbar, wodurch eine separate Energieversorgung im Seilkran nicht erforderlich ist. Beispielsweise können mit vom Bagger übertragener Energie eine Seilwinde des Seilkranes oder bewegbare Abstützeinrichtungen angetrieben werden. Die Energie kann vom Bagger insbesondere als mechanische Energie, beispielsweise über eine Koppelwelle oder in hydraulischer Form über eine Hydraulikleitung, oder als elektrische Energie übertragen werden.

Mit Vorteil ist am Seilkran ein Energiespeicher, insbesondere eine Batterie, ein Kondensator, ein hydraulischer Speicher oder ein Akkumulator, vorgesehen. Der Energiespeicher ist in der Regel energetisch mit dem Bagger verbindbar, sodass dieser durch den Bagger aufladbar ist. Ferner ist der Energiespeicher mit am Seilkran angeordneten Aggregaten, insbesondere Seilwinden, verbunden, sodass diese mit Energie aus dem Energiespeicher versorgt werden können. Es können dann der Bagger und der Seilkran auch gleichzeitig unter Volllast betrieben werden, wobei der Seilkran eine Energie aus dem Energiespeicher entnehmen kann, sodass der Bagger nicht überlastet wird. Ferner ist es günstig, wenn der Seilkran mit einer Steuerung eines Antriebes bzw. eines Motors des Baggers koppelbar ist. Der Motor des Baggers kann dann bei Bedarf vom Seilkran aus automatisiert aktiviert werden, um den Energiespeicher des Seilkranes zu laden, sodass der Energiespeicher gezielt dann geladen werden kann, wenn der Bagger selbst nicht bei Volllast betrieben wird.

Der Energiespeicher kann auch derart in einer durch Bagger und Seilkran gebildeten Anlage angeordnet sein, dass vom Energiespeicher aus sämtliche Aggregate der Anlage mit Energie versorgbar sind, also sowohl Aggregate des Baggers als auch Aggregate des Seilkranes.

Üblicherweise ist die Koppeleinrichtung in einem unteren Bereich des unteren Teiles des Mastes angeordnet, sodass diese bei Befestigung des Seilkranes an einem Bagger unter dem Oberwagen positioniert ist. Dadurch kann der Oberwagen frei oberhalb der Koppeleinrichtung rotiert werden. Ferner ist die Koppeleinrichtung üblicherweise derart mit dem Mast verbunden, dass der untere, üblicherweise im Wesentlichen starr mit dem Bagger verbundene Teil des Mastes bzw. der untere Mastteil bei Befestigung des Seilkranes am Unterwagen des Baggers etwa vertikal ausgerichtet ist. Dadurch sind einerseits eine günstige Gewichtsverteilung und andererseits eine kompakte Bauform erreicht, bei welcher der Oberwagen stets relativ zum Unterwagen rotierbar ist.

Die Koppeleinrichtung kann auch eine sogenannte Tilt-Einrichtung umfassen, mit welcher der Seilkran relativ zum Bagger um eine horizontale Achse schwenkbar ist. Dadurch kann der Seilkran auch dann vertikal ausgerichet werden, wenn der Bagger nicht auf einer horizontalen Fläche bzw. in steilem Gelände positioniert ist.

Um den Seilkran mit einem Bagger auf besonders einfache Weise transportieren zu können, ist es günstig, wenn der Mast knickbar und/oder teleskopierbar ausgebildet ist. Üblicherweise werden hierbei konkrete Abmessungen, beispielsweise Positionen von Knickachsen, derart gewählt, dass ein oberer Teil des geknickten Mastes bzw. ein oberer Mastteil bei Anordnen des Seilkranes an einem Bagger angrenzend an ein oberes Ende des Baggers, insbesondere angrenzend an ein Fahrerhaus des Baggers, angeordnet ist. Dadurch wird eine besonders kompakte Bauweise in der Transportposition bei günstiger Gewichtsverteilung erreicht. Bevorzugt ist der Mast an zwei Positionen um Knickachsen knickbar, welche Knickachsen senkrecht zueinander angeordnet sind. Der Mast wird somit durch den mit dem Unterwagen des Baggers verbindbaren unteren Mastteil sowie den oder die mit dem unteren Mastteil um Knickachsen bewegbar verbundenen oberen Mastteilen gebildet.

Günstig ist es, wenn der Seilkran derart ausgebildet ist, dass bei Anordnung des Seilkranes an einem Bagger eine gleichzeitige Betätigung des Baggers sowie des Seilkranes möglich ist. Eine gleichzeitige Betätigung des Baggers und des Seilkranes liegt beispielsweise dann vor, wenn der Oberwagen des Baggers relativ zum Unterwagen rotiert wird und gleichzeitig über am Mast geführte Seile Baumstämme oder dergleichen transportiert werden, wobei eine Position des Mastes unabhängig von einer Position des Oberwagen bzw. eines Arbeitszustandes des Baggers ist. Hierzu ist die Koppeleinrichtung in der Regel für eine Befestigung des Mastes an einem Unterwagen des Baggers in der Weise ausgebildet, dass der Oberwagen oberhalb der Koppeleinrichtung ohne Kollision mit dem Mast frei rotieren kann.

Üblicherweise ist am Seilkran eine Seilwinde vorgesehen, um über den Mast Baumstämme zu transportieren. Die Baumstämme können dann von entfernten Positionen zum Bagger transportiert werden, mit welchem diese bearbeitet werden können. Hierzu kann am Bagger insbesondere ein Harvester-Kopf montiert sein. Eine Energie zur Betätigung der Seilwinde kann vom Bagger bereitgestellt und beispielsweise über die Koppeleinrichtung an die Seilwinde übertragen werden.

Günstig ist es, wenn Abstützeinrichtungen vorgesehen sind, welche relativ zum unteren Mastteil derart absenkbar sind, dass der Mast in einer Arbeitsposition durch die Abstützeinrichtungen stabil auf einem Untergrund positionierbar ist. Der Seilkran kann somit an einer Arbeitsposition über die Abstützeinrichtungen stabil mit dem Untergrund verbunden werden, sodass über die Koppeleinrichtung im Wesentlichen keine vertikalen Kräfte übertragen werden. Dadurch ist ein stabiles Seilen mit dem Seilkran bei gleichzeitiger Betätigung des Baggers möglich. Zur Erreichung einer platzsparenden Vorrichtung, welche mit einem Bagger somit auch in sehr unwegsamem Gelände kompakt transportierbar ist, ist es vorteilhaft, wenn die Abstützeinrichtungen parallel zu einer Längsachse des Mastes absenkbar sind.

Es hat sich gezeigt, dass eine besonders robuste und gleichzeitig einfach herstellbare Bauweise erreicht wird, wenn der untere Mastteil im Wesentlichen starr mit dem Unterwagen des Baggers verbindbar ist, wobei der untere Mastteil bzw. eine Längsachse desselben vertikal ausgerichtet ist, wenn der Seilkran über die Koppeleinrichtung mit dem Bagger verbunden ist. Dadurch wird gleichzeitig eine vorteilhafte Gewichtsverteilung am Bagger erreicht, sodass dieser auch in unwegsamem Gelände zuverlässig verfahrbar ist.

Um den Seilkran bei robuster Bauweise rasch in eine Arbeitsposition zu bringen, in welcher dieser über die Abstützeinrichtungen gegenüber einem Untergrund abgestützt ist, hat es sich bewährt, dass die Abstützeinrichtungen vertikal verfahrbare Stempel aufweisen, welche insbesondere durch Hydraulikzylinder betätigbar sind. Die Hydraulikzylinder können dabei mit einer Hydraulik des Baggers verbindbar sein, sodass keine separaten Antriebsaggregate erforderlich sind. In der Regel sind die Stempel parallel zu einer Längsachse des mit dem Bagger über die Koppeleinrichtung verbindbaren unteren Mastteiles verfahrbar.

Durch ein mit dem Seilkran üblicherweise an einem oberen Ende verbundenes Seil aufgebrachte Zugkräfte können auf zuverlässige Weise abgeleitet werden, wenn die Abstützeinrichtungen in einer Arbeitsposition um etwa horizontale Achsen schwenkbare Stützarme aufweisen, um ein über eine horizontale Seilkraft aufgebrachtes Biegemoment stabil aufnehmen zu können. Dadurch sind auch große Biegemomente, welche über eine Zugkraft des Seiles auf den Seilkran aufgebracht werden, zuverlässig ableitbar, sodass eine hohe Standsicherheit gewährleistet ist. Die Stützarme können dabei grundsätzlich an jeder Seite des Mastes angeordnet sein. Üblicherweise sind zumindest zwei Stützarme vorgesehen, welche in einer Arbeitsposition seitlich positioniert und um horizontale Schwenkachsen drehbar mit dem unteren Mastteil verbunden sind. Bevorzugt weisen die Stützarme eine Länge auf, welche mehr als 50 % einer Höhe des Mastes entspricht, und sind durch Hydraulikzylinder betätigbar.

Normalerweise ist der Seilkran in einer Transportposition derart mit dem Bagger verbunden, dass der Seilkran vollständig von einem Untergrund beabstandet ist. Es kann allerdings auch zweckmäßig sein, dass der Seilkran an einem unteren Ende Stützräder aufweist, um in unwegsamem Gelände ein Kippen des Baggers, mit welchem der Seilkran verbunden ist, zu verhindern.

Der Seilkran kann alternativ mittels der Stützräder bzw. einer Nachlaufachse auch derart ausgebildet sein, dass dieser flexibel über die Koppeleinrichtung an den Bagger ankoppelbar und als Anhänger vom Bagger nachziehbar ist. Dadurch wird der Bagger bei einem Transport nicht durch eine Gewichtskraft des Seilkranes belastet.

Vorteilhaft ist es bei einem Bagger, welcher einen Unterwagen und einen um eine vertikale Rotationsachse, welche vorzugsweise etwa mittig angeordnet ist, drehbar mit dem Unterwagen verbundenen Oberwagen aufweist, wenn ein erfindungsgemäßer Seilkran mit dem Bagger verbunden ist, vorzugsweise am Unterwagen. Ein derartiger Bagger ermöglicht einerseits einen Transport sowohl des Baggers als auch des Seilkranes durch nur eine Person, sodass bei einem Betrieb Personalkosten minimiert sind. Andererseits ist mit einem solchen Bagger ein gleichzeitiges Seilen und Betätigen des Baggers möglich, wenn sich der Bagger in einer Arbeitsposition befindet, zumal der Oberwagen auch bei verbundenem Seilkran relativ zum Unterwagen um die vertikale Rotationsachse drehbar ist. Darüber hinaus ist ein solcher Bagger auch in unwegsamem Gelände gut verfahrbar, weil durch den mit dem Unterwagen, welcher normalerweise Räder oder ein Raupenfahrwerk des Baggers trägt, verbundenen, unteren Mastteil eine günstige Gewichtsverteilung erreicht ist.

Vorteilhaft ist es, wenn der untere Mastteil vertikal ausgerichtet und derart mit dem Bagger verbunden ist, dass in einer Arbeitsposition des Mastes, in welcher dieser über Abstützelemente starr mit einem Untergrund verbunden ist, eine kollisionsfreie Rotation des Oberwagens relativ zum Unterwagen möglich ist. Dadurch ist eine Funktionsfähigkeit des Baggers als solcher durch den am Bagger angeordneten Seilkran nicht eingeschränkt, sodass ein gleichzeitiges Seilen und Arbeiten des Baggers möglich ist. Üblicherweise ist der Seilkran bzw. die Koppeleinrichtung hierzu derart ausgebildet, dass der über die Koppeleinrichtung im Wesentlichen starr bzw. nur um eine horizontale Kippachse verschwenkbare mit dem Unterwagen verbundene untere Mastteil einen größeren Abstand von der vertikalen Rotationsachse als der Oberwagen aufweist.

Günstig ist es, wenn der Mast derart knickbar ist, dass ein oberer Mastteil in einer Transportposition an einem oberen Ende des Baggers angrenzend angeordnet ist. Der Bagger, an welchem der Seilkran angeordnet ist, ist somit einerseits in eine Transportposition bringbar, in welcher ein oberer Mastteil oberhalb eines oberen Endes des Baggers, insbesondere an ein oberes Endes eines Fahrerhauses angrenzend, angeordnet ist. In der Transportposition kann der Bagger somit kompakt verfahren werden, sodass dieser auch durch Tunnel und dergleichen transportierbar ist, wobei gleichzeitig ein für eine Bewegung in unwegsamem Gelände vorteilhafter Schwerpunkt erreicht ist. Andererseits kann der Bagger dadurch auf einfachste Weise in eine Arbeitsposition gebracht werden, indem der Mast aufgeklappt bzw. errichtet wird, sodass mittels des Seilkranes geseilt und gleichzeitig mit dem Bagger gebaggert werden kann.

Um eine besonders gute Verfahrbarkeit des Baggers zu erreichen, ist es vorteilhaft, wenn der Seilkran mit dem Bagger in einem Bereich des Unterwagens verbunden ist, über welchen der Oberwagen bei einer Rotation bewegbar ist. Der üblicherweise vertikal ausgerichtete, untere Mastteil ist somit in aller Regel mit einem minimalen Abstand zum Bagger angeordnet und über die Koppeleinrichtung im Wesentlichen starr mit dem Bagger verbunden, sodass der Oberwagen zwar relativ zum Unterwagen rotierbar ist, jedoch gleichzeitig ein Schwerpunkt nahe der Rotationsachse erreicht wird.

Günstig ist es, wenn der Seilkran mit einer Antriebseinheit des Baggers derart verbunden ist, dass Energie von der Antriebseinheit zum Seilkran übertragbar ist, um den Seilkran durch den Bagger mit Energie zu versorgen. Es ist dann kein separater Antrieb im Seilkran erforderlich, um beispielsweise eine Seilwinde oder Abstützeinrichtungen zu betätigen und Baumstämme zu transportieren. Dadurch kann der Seilkran sehr einfach, robust und leichtgewichtig ausgebildet sein, sodass dieser einfach und auf kleinem Raum transportierbar ist. Üblicherweise ist eine Steuerung des Seilkranes, welcher vorzugsweise auch einen Energiespeicher zur Zwischenspeicherung von Energie aufweist, mit einer Steuerung des Baggers bzw. einer Motorsteuerung des Baggers verbunden. Dadurch kann gewährleistet werden, dass der Motor des Baggers durch die zusätzliche Belastung aufgrund des Seilkranes nicht überlastet wird.

Es versteht sich, dass der Bagger sowohl als Raupenbagger als auch als Radbagger ausgebildet sein kann, um die erfindungsgemäßen Wirkungen zu erreichen. Die vertikale Rotationsachse ist üblicherweise etwa mittig am Bagger angeordnet, sodass durch den am Bagger angeordneten Seilkran, welcher bei einem Transport üblicherweise an einer einem Baggerarm gegenüberliegenden Seite positioniert ist, eine günstige Schwerpunktslage erreicht wird.

Weitere Merkmale, Vorteile und Wirkungen ergeben sich anhand der nachfolgend dargestellten Ausführungsbeispiele. In den Zeichnungen, auf welche dabei Bezug genommen wird, zeigen:
Fig. 1 einen erfindungsgemäßen Seilkran;
Fig. 2 bis 4 einen Bagger mit einem erfindungsgemäßen Seilkran in einer Transportposition;
Fig. 5 und 6 einen Bagger mit einem erfindungsgemäßen Seilkran in einer weiteren Position;
Fig. 7 einen Bagger mit einem weiteren erfindungsgemäßen Seilkran in einer Arbeitsposition.

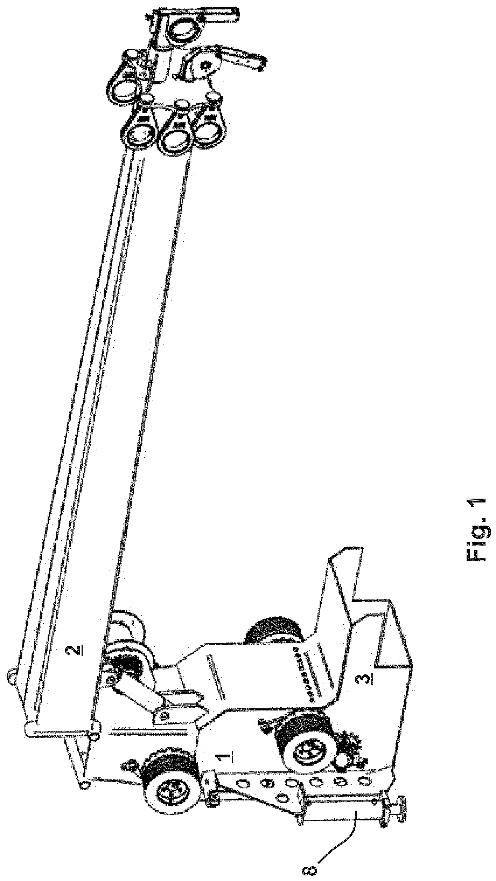

Fig. 1 zeigt einen erfindungsgemäßen Seilkran, welcher einen unteren Mastteil 1 und eine mit dem unteren Mastteil 1 verbundene Koppeleinrichtung 3 aufweist, mit welcher der Seilkran mit einem Unterwagen 5 eines Baggers 4 lösbar verbindbar ist. Es versteht sich, dass die Koppeleinrichtung 3 auch einteilig mit dem unteren Mastteil 1 ausgebildet sein kann. Der Mast wird hier durch den unteren Mastteil 1 und einen mit dem unteren Mastteil 1 drehbar bzw. knickbar verbundenen oberen Mastteil 2 gebildet, sodass der Seilkran auf kleinem Raum transportierbar ist. Am Seilkran sind bodenseitig als hydraulisch betätigbare Stempel 8 ausgebildete Abstützeinrichtungen angeordnet, sodass der Seilkran in einer Arbeitsposition auch unabhängig vom Bagger 4 stabil positionierbar ist. Der Seilkran weist ferner eine Seilwinde auf, um über auf dem Mast geführte Seile Baumstämme zu transportieren. Der Seilkran ist mit einer Antriebseinheit des Baggers 4 verbindbar, sodass beispielsweise eine für einen Transport von Baumstämmen erforderliche Energie vom Bagger 4 bereitgestellt werden kann und am Seilkran selbst keine separate Antriebseinheit erforderlich ist. Zur Zwischenspeicherung von Energie kann am Seilkran ferner ein Energiespeicher wie eine Batterie, ein Hydraulikspeicher oder ein Akkumulator vorgesehen sein. Der Energiespeicher kann zur temporären Energieversorgung von sämtlichen Aggregaten einer durch Bagger und Seilkran gebildeten Anlage eingesetzt werden, beispielsweise um Lastspitzen abzudecken.

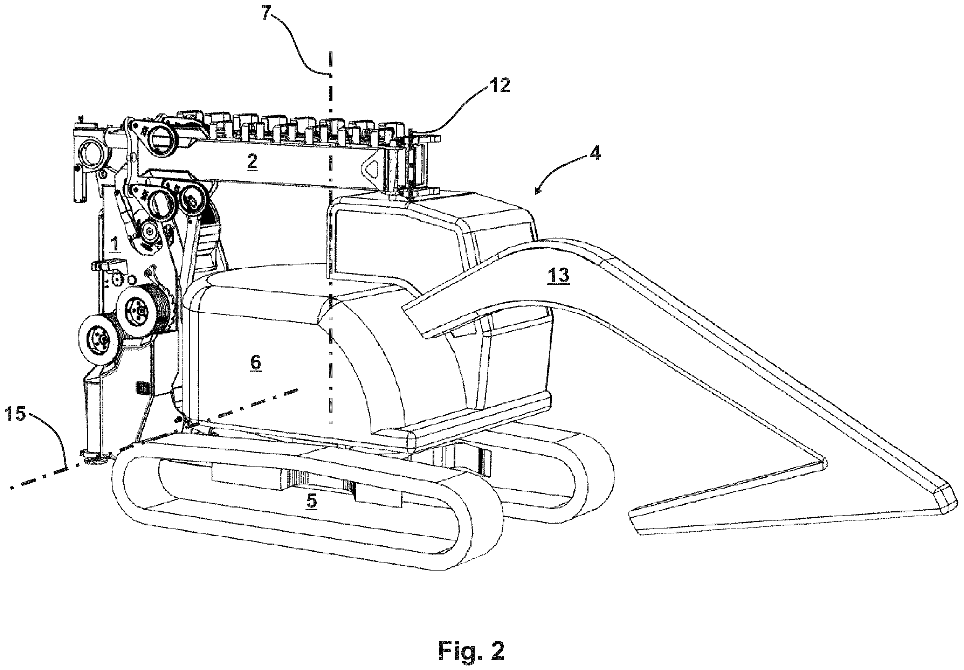

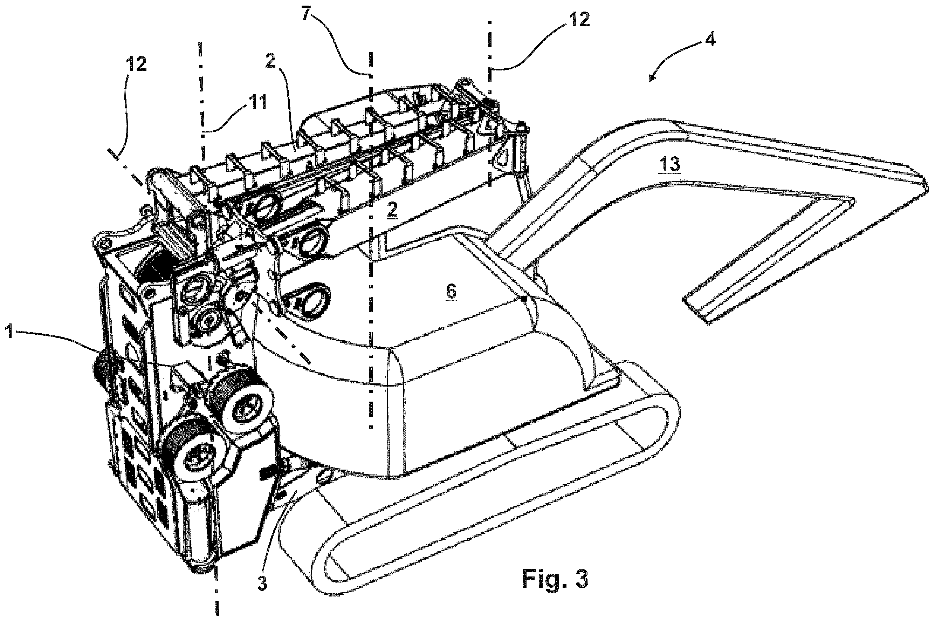

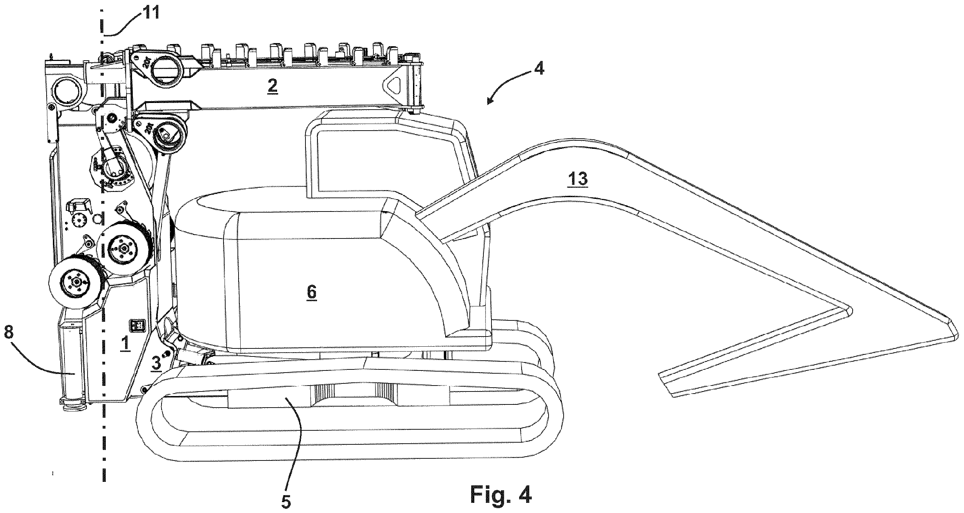

Fig. 2 bis 6 zeigen einen Bagger 4 mit einem ersten Ausführungsbeispiel eines erfindungsgemäßen Seilkranes. Der Seilkran weist dabei einen Mast auf, welcher an zwei Positionen um senkrecht zueinander angeordnete Knickachsen 12 knickbar ist, sodass der Seilkran in die Fig. 2 bis 4 dargestellte Transportposition bringbar ist, in welcher der Bagger 4 samt Mast kompakt und auf kleinem Bauraum transportierbar sind. Über eine Koppeleinrichtung 3 ist dabei ein unterer Mastteil 1 mit einem Unterwagen 5 des Baggers 4 verbunden, gegenüber welchem ein Oberwagen 6 um eine vertikale etwa mittige Rotationsachse 7 rotierbar ist. Der Mast wird hierbei somit durch einen unteren Mastteil 1 sowie zwei weitere obere Mastteile 2 gebildet, welche gegenüber dem unteren Mastteil 1 um die Knickachsen 12 knickbar bzw. drehbar sind, sodass in der Transportposition eine kompakte Vorrichtung erreicht wird.

Wie ersichtlich ragt der mit einem Unterwagen 5 des Baggers 4 verbundene, untere Mastteil 1 nur minimal über ein hinteres Ende des Baggers 4 bzw. des Oberwagens 6 des Baggers 4 hinaus und ist eine Längsachse 11 des unteren Mastteiles 1 in der Transportposition etwa senkrecht ausgerichtet, sodass in Verbindung mit dem an der gegenüberliegenden Seite des Baggers 4 angeordneten Baggerarm 13 in der Transportposition ein etwa mittiger Schwerpunkt erreicht wird. Dies ist vorteilhaft, um den Bagger 4 samt Seilkran in unwegsamem Gelände zu bewegen. Ferner ist der Seilkran in der Transportposition vollständig vom Boden beabstandet. Eine Gewichtskraft des Seilkranes wird dabei über eine Koppeleinrichtung 3, welche einen unteren Mastteil 1 mit einem Unterwagen 5 des Baggers 4 verbindet, an den Bagger 4 übertragen. Der Bagger 4 trägt somit den Seilkran in der Transportposition vollständig mittels der Koppeleinrichtung 3. Ein Fahrwerk des Baggers 4 wird daher über die Koppeleinrichtung 3 in der Transportposition zusätzlich durch eine Gewichtskraft des Seilkranes belastet. Dadurch weist der Bagger 4 auch dann noch eine kleine Aufstandsfläche auf, wenn der Seilkran mit dem Bagger 4 verbunden ist. Der Bagger 4 kann somit auch mit einem verbundenen Seilkran in der Transportposition in unwegsamem Gelände einfach verfahren werden.

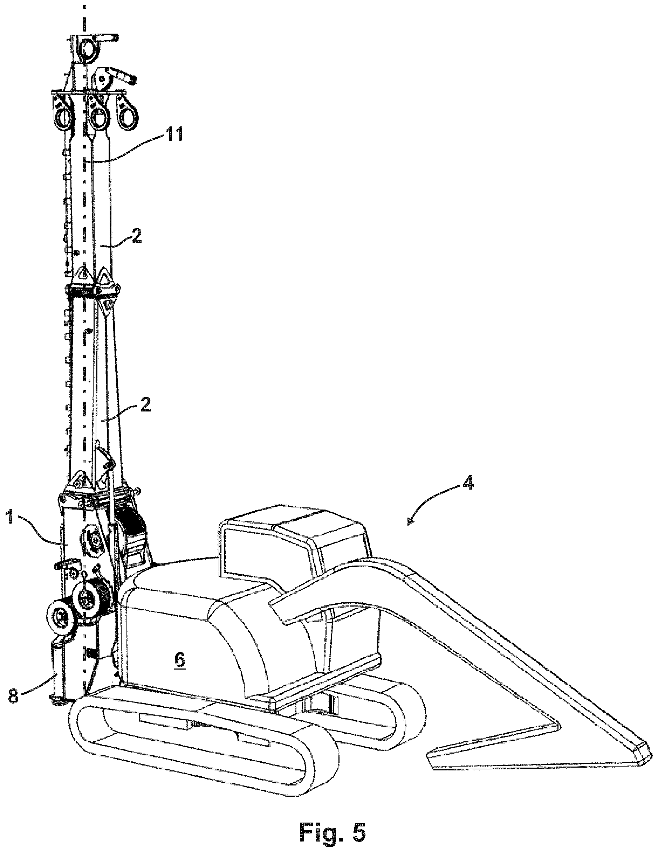

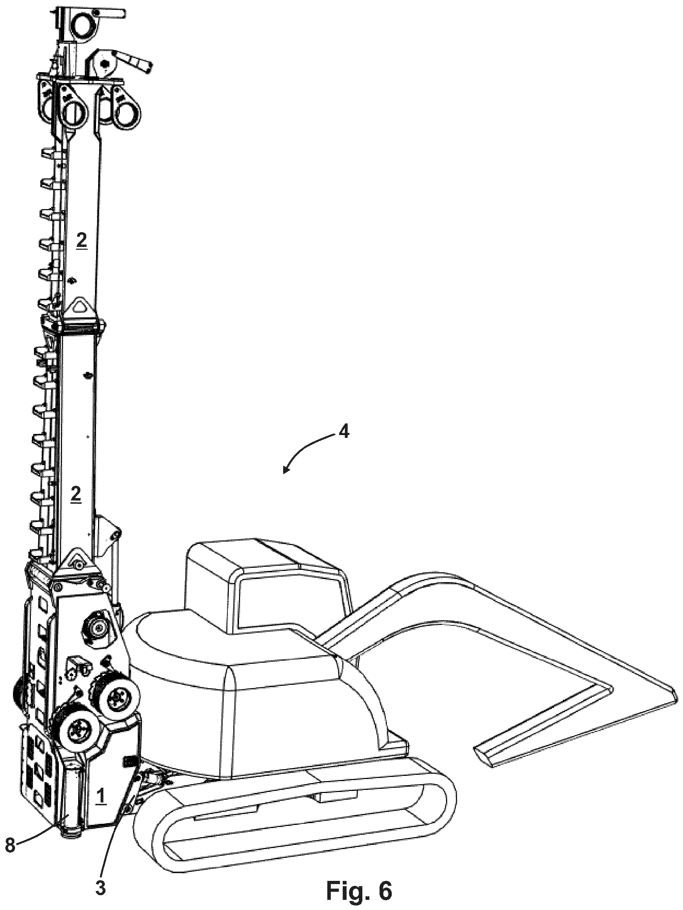

Aus der in Fig. 2 bis 4 dargestellten Transportposition ist der Seilkran in eine in Fig. 5 und 6 dargestellte Position bringbar, in welcher der Mast aufgerichtet ist. Ferner können als über Hydraulikzylinder betätigbare Stempel 8 ausgebildete Abstützelemente abgesenkt werden, sodass der Seilkran über die Stempel 8 stabil mit einem Untergrund verbunden ist und Kräfte direkt an den Untergrund übertragen werden können. Die Koppeleinrichtung 3 ist dann im Wesentlichen lastfrei, sodass der Bagger 4 unabhängig vom Seilkran betätigt werden kann und eine Belastung des Seilkranes nicht zu einer Belastung eines Fahrwerkes des Baggers 4 führt.

Die Koppeleinrichtung 3 weist eine sogenannte Tilt-Einrichtung auf, mit welcher der Mast relativ zum Bagger 4 und zu einem starr mit dem Bagger 4 verbundenen Ende der Koppeleinrichtung 3 um eine Kippachse 15 schwenkbar ist, üblicherweise mit Hydraulikzylindern. Die Kippachse 15 ist in der Regel etwa parallel zu einer Ebene eines Untergrundes, auf welchem der Bagger 4 steht bzw. bei einem Radbagger parallel zu Achsen der Räder und vorzugsweise etwa horizontal ausgerichtet. Der Mast kann somit mit der Tilt-Einrichtung auch dann in eine vertikale Position gebracht werden, wenn der Bagger 4 in nicht horizontalem Gelände positioniert ist, beispielsweise auf einem Steilhang. Der untere Mastteil 1 ist somit bei Anordnung des Seilkranes an einem Bagger 4 im Wesentlichen starr und nur um die Kippachse 15 verschwenkbar mit dem Bagger 4 verbunden, um unabhängig von einer Geländeneigung eine vertikale Ausrichtung des Mastes gewährleisten zu können.

Der Seilkran ist somit auch nach Montage am Bagger 4 über die Koppeleinrichtung 3 in eine Transportposition, in welcher der Seilkran von einem Untergrund beabstandet transportierbar ist, und in eine Arbeitsposition bringbar, in welcher eine Gewichtskraft des Seilkranes sowie gegebenenfalls zusätzliche Lasten, über Abstützelemente direkt an den Untergrund übertragen werden, sodass der Bagger 4 uneingeschränkt betätigbar und der Oberwagen 6 gleichzeitig relativ zum Unterwagen 5 rotierbar ist, ohne eine Funktion des Seilkranes zu beeinträchtigen.

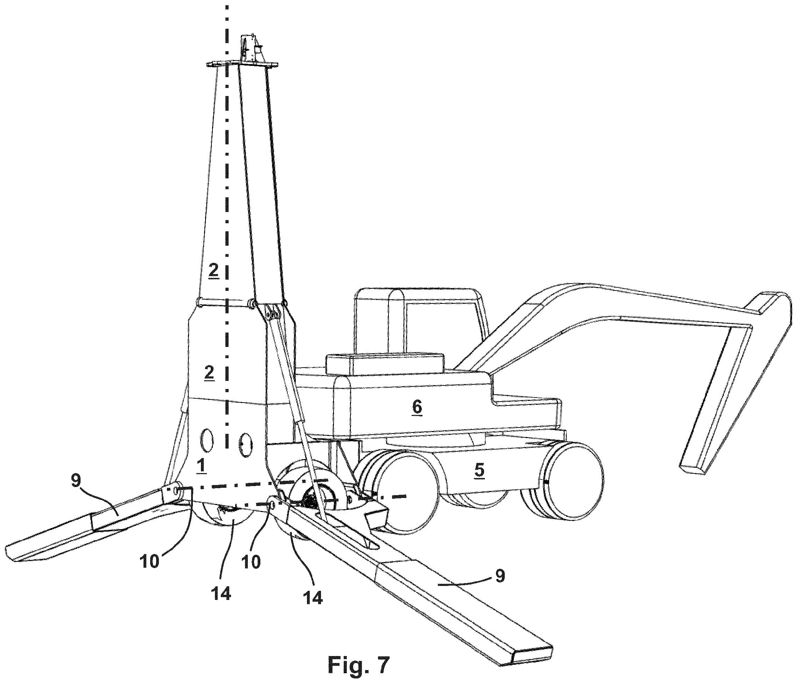

Fig. 7 zeigt ein weiteres Ausführungsbeispiel eines Baggers 4 mit einem erfindungsgemäßen Seilkran. Auch hier weist der Seilkran einen knickbaren Mast auf, sodass der Seilkran am Bagger 4 in eine kompakte Transportposition bringbar ist. Um auch bei hohen Zugkräften, welche über an einem oberen Ende des Mastes angebrachte Seile auf den Seilkran wirken können, eine hohe Stabilität zu erreichen, sind um etwa horizontale Achsen 10 schwenkbare Stützarme 9 vorgesehen. In der dargestellten Position sind diese seitlich des Baggers 4 angeordnet, um den Mast gegenüber dem Boden abzustützen. Dadurch kann auf zusätzliche Ankerseile verzichtet werden.

Der Bagger 4 ist somit in der Arbeitsposition dargestellt, in welcher die Koppeleinrichtung 3 im Wesentlichen lastfrei ist. Dadurch sind auch große Lasten mit dem Seilkran zuverlässig transportierbar, ohne eine Stabilität des Baggers 4 einzuschränken. Bei diesem Ausführungsbeispiel sind am unteren Ende des Seilkranes auch Stützräder 14 vorgesehen, um einen Transport zu erleichtern.

Alternativ zu einer direkten, im Wesentlichen starren Verbindung des Seilkranes mit dem Bagger 4 kann der Seilkran auch flexibel, lösbar mit dem Bagger 4 verbunden sein und bei einem Transport wie ein Anhänger gezogen werden. In dem Fall wird der Bagger 4 nicht durch eine Gewichtskraft des Seilkranes belastet.

Mit einem erfindungsgemäßen Seilkran ist eine effiziente Holzverarbeitung möglich, weil einerseits ein Transport von Bagger 4 samt Seilkran gemeinsam möglich ist. Andererseits ist in einer Arbeitsposition ein gleichzeitiges Betätigen des Baggers 4 sowie des Seilkranes möglich. So ist der Oberwagen 6 des Baggers 4 auch bei angekoppeltem Seilkran relativ zum Unterwagen 5 um die vertikale Rotationsachse 7 drehbar, ohne dass sich dadurch eine Position des Seilkranes ändert. Dadurch ist ein gleichzeitiges Seilen und Holzverarbeiten auch in unwegsamem Gelände auf einfache Weise möglich. Nachdem der Seilkran energetisch mit dem Bagger 4 verbindbar ist, ist kein separates Antriebsaggregat am Seilkran erforderlich, wodurch sich eine einfache und gleichzeitig robuste Bauweise ergibt.

## Patentansprüche

1. Bagger (4) mit einem Unterwagen (5) und einem um eine vertikale Achse (10) drehbar mit dem Unterwagen (5) verbundenen Oberwagen (6), wobei mit dem Bagger (4) ein Seilkran verbunden ist, welcher Seilkran einen Mast aufweist, an welchem ein Seil zum Transport von Baumstämmen und dergleichen anbringbar ist, wobei eine Koppeleinrichtung (3) vorgesehen ist, mit welcher ein unterer Mastteil (1) mit dem Unterwagen (5) des Baggers (4) verbunden ist, **dadurch gekennzeichnet, dass** eine gleichzeitige Betätigung des Baggers (4) sowie des Seilkranes möglich ist und der Mast derart knickbar ist, dass ein oberer Mastteil (2) in einer Transportposition an einem oberen Ende des Baggers (4) angrenzend angeordnet ist.

2. Bagger (4) nach Anspruch 1, **dadurch gekennzeichnet, dass** die Koppeleinrichtung derart ausgebildet ist, dass der Seilkran mit dem Unterwagen (5) des Baggers (4) derart verbindbar ist, dass der Seilkran mit dem Bagger (4) von einem Boden beabstandet transportierbar ist.

3. Bagger (4) nach Anspruch 1 oder 2, **dadurch gekennzeichnet, dass** der Seilkran mit einer Antriebseinheit des Baggers (4) koppelbar ist, sodass der Seilkran vom Bagger (4) mit Energie versorgbar ist.

4. Bagger (4) nach einem der Ansprüche 1 bis 3, **dadurch gekennzeichnet, dass** am Seilkran ein Energiespeicher, insbesondere eine Batterie oder ein Akkumulator, vorgesehen ist.

5. Bagger (4) nach einem der Ansprüche 1 bis 4, **dadurch gekennzeichnet, dass** eine Seilwinde vorgesehen ist, um über den Mast Baumstämme zu transportieren.

6. Bagger (4) nach einem der Ansprüche 1 bis 5, **dadurch gekennzeichnet, dass** Abstützeinrichtungen vorgesehen sind, welche relativ zum unteren Mastteil (1) derart absenkbar sind, dass der Mast in einer Arbeitsposition durch die Abstützeinrichtungen stabil auf einem Untergrund positionierbar ist.

7. Bagger (4) nach Anspruch 6, **dadurch gekennzeichnet, dass** die Abstützeinrichtungen vertikal verfahrbare Stempel (8) aufweisen, welche insbesondere durch Hydraulikzylinder betätigbar sind.

8. Bagger (4) nach Anspruch 6 oder 7, **dadurch gekennzeichnet, dass** die Abstützeinrichtungen in einer Arbeitsposition um etwa horizontale Achsen (10) schwenkbare Stützarme (9) aufweisen, um ein über eine horizontale Seilkraft aufgebrachtes Biegemoment stabil aufnehmen zu können.

9. Bagger (4) nach einem der Ansprüche 1 bis 8, **dadurch gekennzeichnet, dass** der Seilkran an einem unteren Ende Stützräder (14) aufweist.

10. Bagger (4) nach einem der Ansprüche 1 bis 9, **dadurch gekennzeichnet, dass** der untere Mastteil (1) vertikal ausgerichtet und derart starr mit dem Bagger (4) verbunden ist, dass in einer Arbeitsposition des Mastes, in welcher dieser über Abstützelemente starr mit einem Untergrund verbunden ist, eine kollisionsfreie Rotation des Oberwagens (6) relativ zum Unterwagen (5) möglich ist.

11. Bagger (4) nach einem der Ansprüche 1 bis 10, **dadurch gekennzeichnet, dass** der Seilkran mit dem Bagger (4) in einem Bereich des Unterwagens (5) verbunden ist, über welchen der Oberwagen (6) bei einer Rotation bewegbar ist.

12. Bagger (4) nach einem der Ansprüche 1 bis 11, **dadurch gekennzeichnet, dass** der Seilkran mit einer Antriebseinheit des Baggers (4) derart verbunden ist, dass Energie von der Antriebseinheit zum Seilkran übertragbar ist, um den Seilkran durch den Bagger (4) mit Energie zu versorgen.

## Claims

1. An excavator (4) having an undercarriage (5) and a superstructure (6) rotatably connected about a vertical axis (10) to the undercarriage (5), wherein a cable crane is connected to the excavator (4), which cable crane comprises a boom to which a cable for transporting tree logs and the like can be attached, wherein a coupling device (3) is provided, with which a lower boom part (1) is connected to the undercarriage (5) of the excavator (4),
**characterised**
**in that** a simultaneous actuation of the excavator (4) and of the cable crane is possible and the boom can be bent in such a manner that an upper boom part (2) in a transport position is arranged adjoining an upper end of the excavator (4).

2. The excavator (4) according to Claim 1,
**characterised**
**in that** the coupling device is configured in such a manner that the cable crane can be connected to the undercarriage (5) of the excavator (4) in such a manner that the cable crane with the excavator (4) can be transported spaced apart from a ground.

3. The excavator (4) according to Claim 1 or 2, **characterised**
**in that** the cable crane can be coupled to a drive unit of the excavator (4), so that the cable crane can be supplied with energy from the excavator (4).

4. The excavator (4) according to any one of the Claims 1 to 3,
**characterised**
**in that** on the cable crane an energy store, in particular a battery or an accumulator is provided.

5. The excavator (4) according to any one of the Claims 1 to 4,
**characterised**
**in that** a cable winch is provided in order to transport tree logs via the boom.

6. The excavator (4) according to any one of the Claims 1 to 5,
**characterised**
**in that** support devices are provided which can be lowered relative to the lower boom part (1) in such a manner that the boom, in a working position, can be positioned on a surface through the support devices in a stable manner.

7. The excavator (4) according to Claim 6,
**characterised**
**in that** the support devices comprise vertically moveable rams (8) which can be actuated in particular by hydraulic cylinders.

8. The excavator (4) according to Claim 6 or 7,
**characterised**
**in that** the support devices in a working position comprise support arms (9) that can be pivoted about an approximately horizontal axis (10), in order to be able to absorb in a stable manner a bending moment applied via a horizontal cable force.

9. The excavator (4) according to any one of the Claims 1 to 8,
**characterised**
**in that** the cable crane comprises support wheels (14) at a lower end.

10. The excavator (4) according to any one of the Claims 1 to 9,
**characterised**
**in that** the lower boom part (1) is vertically oriented and rigidly connected to the excavator (4) in such a manner that in a working position of the boom, in which the same is rigidly connected to a surface via support elements, a rotation of the superstructure (6) relative to the undercarriage (5) free of collision is possible.

11. The excavator (4) according to any one of the Claims 1 to 10,
**characterised**
**in that** the cable crane is connected to the excavator (4) in a region of the undercarriage (5), via which the superstructure (6) is moveable upon a rotation.

12. The excavator (4) according to any one of the Claims 1 to 11,
**characterised**
**in that** the cable crane is connected to a drive unit of the excavator (4) in such a manner that energy can be transmitted from the drive unit to the cable crane in order to supply the cable crane with energy by way of the excavator (4).

## Revendications

1. Excavatrice (4) dotée d'un train de roulement (5) et d'un train supérieur (6) relié de manière rotative au train de roulement (5) autour d'un axe vertical (10), dans lequel un câble grue est relié à l'excavatrice (4), lequel câble grue comporte un mât, auquel peut être fixée une corde pour le transport de troncs d'arbres et similaires, dans lequel un dispositif d'accouplement (3) est prévu, avec lequel une partie inférieure du mât (1) avec est reliée train de roulement (5) de l'excavatrice (4), **caractérisée en ce que** le fonctionnement simultané de l'excavatrice (4) et du câble grue est possible et le mât peut être courbé de telle sorte qu'une partie supérieure du mât (2) soit en position de transport sur une extrémité supérieure de l'excavatrice (4) adjacente.

2. Excavatrice (4) selon la revendication 1, **caractérisée en ce que** le dispositif d'accouplement est conçu de telle sorte que le câble grue puisse être relié au train de roulement (5) de l'excavatrice (4) de telle manière que le câble grue puisse être transporté avec l'excavatrice (4) à distance du sol.

3. Excavatrice (4) selon la revendication 1 ou 2, **caractérisée en ce que** le câble grue peut être couplé à une unité d'entraînement de l'excavatrice (4), de sorte que le câble grue puisse être alimenté en énergie par l'excavatrice (4).

4. Excavatrice (4) selon une des revendications 1 à 3, **caractérisée en ce que** sur un câble grue un accumulateur d'énergie, notamment une batterie ou un accumulateur est prévu.

5. Excavatrice (4) selon une des revendications 1 à 4, **caractérisée en ce qu'**un treuil à câble est fourni pour transporter les troncs d'arbres sur le mât.

6. Excavatrice (4) selon une des revendications 1 à 5, **caractérisée en ce que** des dispositifs de support sont prévus, qui peuvent être abaissés par rapport à la partie inférieure du mât (1) de telle sorte que le mât puisse être positionné de manière stable sur une surface dans une position de travail par les dispositifs de support.

7. Excavatrice (4) selon la revendication 6, **caractérisée en ce que** les dispositifs de support comportent des tampons (8) mobiles verticalement, qui sont notamment actionnables par des vérins hydrauliques.

8. Excavatrice (4) selon la revendication 6 ou 7, **caractérisée en ce que** les dispositifs de support comportent des bras de support (9) qui peuvent pivoter autour d'axes approximativement horizontaux (10) dans une position de travail afin de pouvoir absorber de manière stable un moment de flexion appliqué via une force de câble horizontale.

9. Excavatrice (4) selon une des revendications 1 à 8, **caractérisée en ce que** le câble grue présente des roues de support (14) à une extrémité inférieure.

10. Excavatrice (4) selon une des revendications 1 à 9, **caractérisée en ce que** la partie inférieure du mât (1) est alignée verticalement et reliée rigidement à l'excavatrice (4), que dans une position de travail du mât, dans laquelle il est relié rigidement à une surface par l'intermédiaire d'éléments de support, une rotation sans collision du train supérieur (6) par rapport au train de roulement (5) est possible.

11. Excavatrice (4) selon une des revendications 1 à 10, **caractérisée en ce que** le câble-grue est relié à l'excavatrice (4) dans une zone du train de roulement (5), via laquelle la superstructure (6) peut être déplacée pendant la rotation.

12. Excavatrice (4) selon une des revendications 1 à 11, **caractérisée en ce que** le câble grue est relié à une unité d'entraînement de l'excavatrice (4) de telle sorte que l'énergie puisse être transférée de l'unité d'entraînement au câble grue afin d'alimenter le câble grue en énergie par l'intermédiaire de l'excavatrice (4) .
